# EUROPÄISCHE PATENTSCHRIFT

(11) **EP 0 714 638 B1**
(45) Veröffentlichungstag und Bekanntmachung des Hinweises auf die Patenterteilung: **13.06.2001**
(21) Anmeldenummer: 95117815.1
(22) Anmeldetag: 10.11.1995
(51) Int. Cl.: A61C 5/06, B05C 17/01, A45D 40/02

(54) **Applikationsgerät für Dentalmasse**
Applicator for dental restorative material
Applicateur de produit obturateur dentaire

(30) Priorität: 30.11.1994 DE 9419200 U
(43) Veröffentlichungstag der Anmeldung: 05.06.1996
(73) Patentinhaber: ERNST MÜHLBAUER KG, 22547 Hamburg (DE)
(72) Erfinder: Mühlbauer, Ernst, D-22609 Hamburg (DE); Lein, Edgar, D-22299 Hamburg (DE)
(74) Vertreter: Glawe, Delfs, Moll & Partner

(56) Entgegenhaltungen:
- US-A- 1 712 840
- US-A- 3 028 672
- US-A- 3 989 392
- US-A- 4 693 684

## Beschreibung

Die Erfindung bezieht sich auf ein Applikationsgerät für Dentalmasse mit einem in Bleistifthaltung greifbaren Schaft, dessen vorderes Ende mit einer die Dentalmasse und einen Kolben enthaltenden Spritze verbunden oder verbindbar ist und der einen Stößel zum Vortreiben des Kolbens enthält, der mit einer Betätigungseinrichtung in demjenigen Bereich des Schafts verbunden ist, in welchem sich bei Bleistifthaltung eine Fingerspitze befindet.

Es ist bekannt, Dentalmassen, wie sie für Zahnfüllungen verwendet werden, in spritzenartigen Kapseln aufzubewahren, die einen zylindrischen Spritzenkörper, einen Kolben zum Austreiben der Masse und eine spitz verengte Öffnung aufweisen zum Applizieren am Ort der Verwendung. Sie werden in Verbindung mit Applikationsgeräten verwendet, die am vorderen Ende eine Kupplungseinrichtung zum Verbinden mit einer Kapsel aufweisen und einen langgestreckten Stößel enthalten, dessen vorderes Ende auf den Kolben der Kapsel einwirkt und am hinteren Ende einen Daumengriff zur Betätigung besitzt (DE-C2-25 28 116, US-A-4 198 756). Insbesondere bei zähfließenden Massen ermöglichen diese Geräte keine ruckfreie Entleerung der Kapseln. Das hat zur Folge, daß der Zahnarzt die Menge der zu applizierenden Masse schwer bestimmen kann.

Bekannt sind auch Geräte der eingangs genannten Art (US-A 4693684, US-A 3221409), bei denen am vorderen Ende des Schafts ein Hebel angeordnet ist, der über eine Ratscheneinrichtung auf den mit einer Zahnstange ausgerüsteten Stößel wirkt. Diese Geräte sind kompliziert und vielteilig und entsprechend aufwendig. Bei einer ähnlichen Anordnung (EP-B 237182) sind der Hebel und der Stößel aus einem Stück geformt mit einem flexiblen Zwischenteil. Dieser Stößel-Hebel ist ein kompliziertes Formstück, das störungsanfällig ist. Außerdem überträgt der Hebel auf seinen Stößelteil nicht nur Kräfte, die in Stößelrichtung verlaufen, sondern auch quer dazu verlaufende Kräfte, die eine hohe Reibung zwischen Stößel und Schaft verursachen, deren Haftreibungsanteil mit daraus resultierendem Stick-Slip-Effekt die genaue Dosierung der Dentalmasse erschwert. Schließlich ist ein Gerät bekannt (US-A 3028672), bei dem am vorderen Schaftende ein mit der Fingerspitze verschiebbarer Schieber angeordnet ist, der über eine Zahnstange eine Serie von Zahnrädern antreibt, die die Bewegung auf eine mit dem Stößel verbundene Zahnstange übertragen. Die Vielteiligkeit dieser Anordnung macht sie aufwendig. Außerdem verursacht sie große Reibung, die die Dosiergenauigkeit beeinträchtigt.

Der Erfindung liegt die Aufgabe zugrunde, eine Anordnung der eingangs genannten Art zu schaffen, die unaufwendig ist und eine genaue Dosierung gestattet. Die erfindungsgemäße Lösung besteht darin, daß die Betätigungseinrichtung für den Stößel ein Paar von am Schaft gelagerten Greifrädern umfaßt, die mit der Fingerspitze antreibbar sind und beiderseits eines Ritzels geringeren Durchmessers angeordnet sind, das in eine am Stößel vorgesehene Zahnstange eingreift.

Die Betätigungseinrichtung für den Stößel besteht somit aus lediglich einem einzigen Teil einfachster Formgebung und Funktion. Das Gerät ist daher in der Herstellung unaufwendig und im Betrieb störungsfrei. Das Zahnrad überträgt nahezu ausschließlich in Stößelrichtung verlaufende Kräfte auf den Stößel. Die Reibung des Stößels im Schaft ist daher gering. Die Lagerreibung des Zahnrads ist gleichfalls vernachlässigbar gering. Aufgrund der geringen Reibung entstehen keine Hafteffekte, die die Dosierung der Dentalmasse erschweren, zumal die Fingerbewegung im Verhältnis der Durchmesser der Zahnradteile untersetzt in die Stößelbewegung umgesetzt wird.

Zwar ist es bekannt (US-A1712840), einen Lippenstift in seinem Gehäuse mittels eines Greifrads vorzuschieben, das auf einer Achse mit einem Ritzel angeordnet ist, das in eine mit dem Lippenstift verbundene Zahnstange eingreift. Jedoch fehlt dort der Bezug zu der Erfindungsaufgabe, eine genaue Dosierung zu gestatten, weil es darauf bei einem Lippenstift nicht ankommt. Auch ist das Greifrad an dem Gehäuse nicht in einer Position angeordnet, in der es bei Bleistifthaltung durch eine Fingerspitze betätigt werden könnte. Schließlich fehlt auch das Merkmal der vorliegenden Erfindung, das ein Paar von Greifrädern beiderseits des Ritzels angeordnet ist. Durch diese Anordnung ergibt sich eine symmetrische Belastung des Zahnrads mit geringer Abnutzung. Außerdem bewirken die beiden Greifräder, deren Abstand wenig größer ist als die Breite des Stößels bzw. der Zahnstange, daß diese sicher im Zahneingriffsbereich seitlich geführt ist.

Oftmals ist es erwünscht, daß die Ausbringöffnung der Spritze gegenüber der Richtung des Schafts abgewinkelt ist, um die Applikation der Dentalmasse zu erleichtern. Zu diesem Zweck kann das vordere Ende des Schafts entsprechend gekrümmt und der Stößel flexibel sein, wie es an sich bekannt ist (US-A 3221409). Eine geringere Reibung erreicht man erfindungsgemäß dadurch, daß der Stößel geradlinig gestreckt ist und daß die fluchtend mit dem Stößel angeordnete Spritze in einem dünnen, plastisch biegbaren Ausbringröhrchen endet, das je nach Bedarf in die vom Zahnarzt gewünschte Richtung gebogen wird. Dieses Merkmal verdient einen ggf. von den zuvor beschriebenen Merkmalen unabhängigen Schutz.

Die Erfindung wird im folgende näher unter Bezugnahme auf die Zeichnung erläutert, die vorteilhafte Ausführungsbeispiele veranschaulicht. Darin zeigen:
- Fig.1: eine Gesamtansicht einer Ausführungsform des Geräts in der Hand des Benutzers, die kein Gegenstand der Erfindung ist.
- Fig.2: den vorderen Bereich der in Fig.1 gezeigten Ausführungsform im Längsschnitt,
- Fig.3: den Längsschnitt des vorderen Bereichs einer abgewandelten Ausführungsform mit zugehöriger Spritzenkapsel im Länggschnitt,
- Fig.4: eine Draufsicht auf den in Fig.3 gezeigten Geräteteil mit eingesetzter Spritzenkapsel und
- Fig.5: einen Querchnitt im Bereich des Betätigungszahnrads.

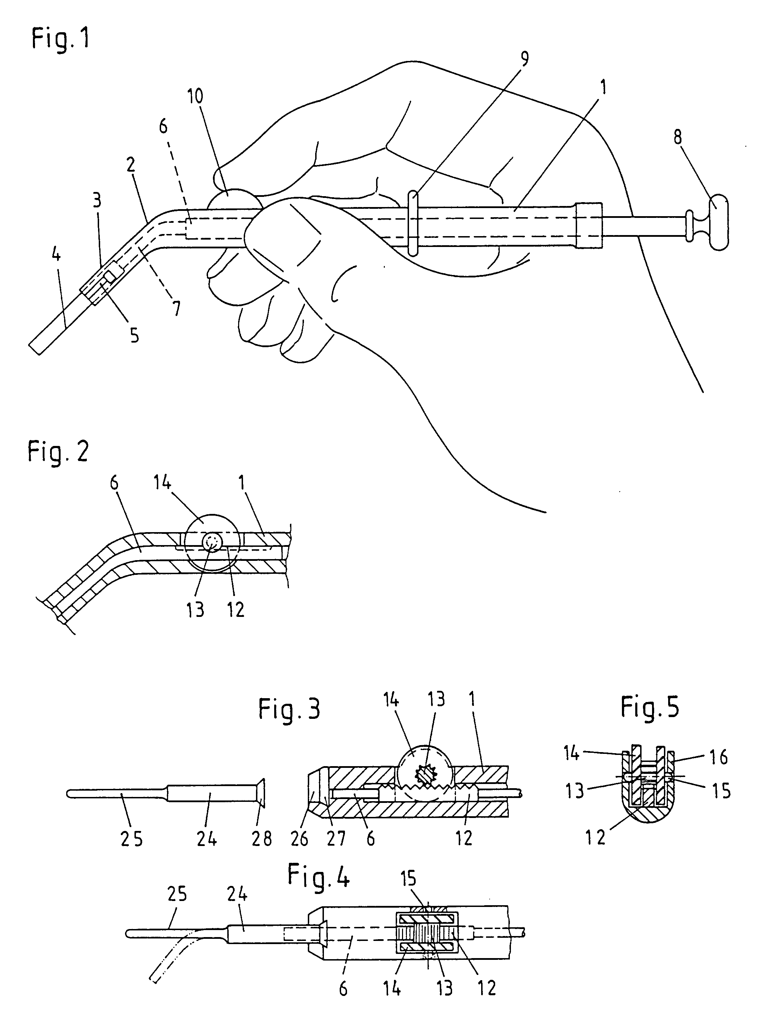

Das Gerät hat einen langgestreckten Schaft 1, der in der Ausführungsform der Fig.1 am vorderen Ende bei 2 ein wenig abgewinkelt ist und am vorderen Ende eine Kupplungseinrichtung 3 zur Verbindung mit einer Spritzenkapsel 4 bildet. Die Spritzenkapsel 4 ist ein hohlzylindrischer Körper, der am hinteren Ende einen Kolben enthält, vor dem sich die Dentalmasse befindet. Das vordere Ende bildet eine Ausbringöffnung, die in der Ausführungsform der Fig.1 nicht verengt ist, um einer gegebenenfalls sehr zähen Dentalmasse einen geringeren Ausbringwiderstand entgegenzusetzen. Im Lagerzustand ist die Spritzenkapsel in geeigneter Weise verschlossen, beispielsweise mittels einer aufsteckbaren Kappe, die im Gebrauchszustand, der in Fig.1 dargestellt ist, abgenommen ist.

Die Kupplungseinrichtung 3 wird im dargestellten Beispiel von einem hohlzylindrischen Teil des Schafts 1 gebildet, in welchen die Spritzenkapsel 4 passend einsetzbar ist und der einen Bajonettausschnitt 5 zum Zusammenwirken mit einem seitlichen Vorsprung der Spritzenkapsel besitzt. Die Kupplungseinrichtung kann selbstverständlich auch anders ausgebildet sein.

Im Schaft 1 ist eine Führungsbohrung enthalten, die einen Stößel 6 enthält, dessen vorderes Ende 7 so flexibel ist, daß es sich der Krümmung 2 des Schafts 1 anzupassen vermag. Der Stößel 6 trägt an seinem hinteren, aus dem Schaft 1 herausragenden Ende eine Daumenplatte 8. Diese kann in Verbindung mit einem am Schaft 1 vorgesehenen Widerlager 9 herkömmlich zum Vorschieben des Stößels 6 verwendet werden, damit dieser auf den Kolben der Spritzenkapsel 4 einwirkt, um die Dentalmasse daraus auszutreiben.

Zusätzlich oder statt der Daumenplatte 8 ist eine Betätigungseinrichtung 10 vorgesehen, die sich nahe dem vorderen Ende des Schafts 1 befindet. Diese Betätigungseinrichtung 10 ist ein Zahnrad, das auf in Fig.1 nicht dargestellte Weise mit dem Stößel 6 derart zusammenwirkt, daß seine Betätigung zum Vor- oder Zurückschieben des Stößels 6 führt. Das Zahnrad 10 kann bei bleistiftartiger Haltung des Schafts 1, wie es in Fig.1 dargestellt ist, mittels des Zeigefingers oder Daumens leicht betätigt werden. Genaue Positionierung der Ausbringöffnung der Spritzenkapsel und sensible Dosierung lassen sich auf diese Weise leicht koordinieren.

Fig.2 zeigt, daß der Stößel 6 bei 12 als Zahnstange ausgeführt ist. Diese wirkt zusammen mit dem Ritzel 13, das wiederum drehfest verbunden ist mit einem Greifrad 14, das oben im Bereich der Spitze des Zeigefingers aus dem Schaft 1 herausragt und zur leichteren Betätigung am Umfang gerändelt, gerieft oder aufgerauht sein kann. Das Greifrad 14 und das Ritzel 13 sind in geeigneter, nicht dargestellter Weise in dem Schaft 1 des Geräts gelagert. Die Untersetzung vom Umfang des Greifrads 14 zum Stößel 6 liegt vorzugsweise zwischen 1:3 und 1:5 und erlaubt in jedem Falle mit mäßiger Fingerkraft einen ruckfreien Vorschub. Das hintere Ende des Stößels 6 kann, wie in Fig.1 gezeigt, aus dem hinteren Ende des Schafts herausragen und mit einer Daumenplatte 8 zum leichteren Zurückziehen bzw. zum Vorschieben bis an die Kapsel heran versehen sein. Notwendig ist dies jedoch nicht.

Das Ausführungsbeispiel gemäß Fig. 3 bis 5 entspricht bezüglich der Ausführung des Stößels 6 als Zahnstange 12 und seines Zusammenwirkens mit Ritzel 13 und Greifrad 14 dem soeben erläuterten Ausführungsbeispiel. In Fig.4 und 5 erkennt man, daß das Greifrad 14 doppelt ausgeführt ist, indem es paarweise beiderseits des Ritzels 13 angeordnet ist. Die Greifräder 14 und das Ritzel 13 können einstückig miteinander ausgeführt sein. Mindestens sind sie drehfest miteinander verbunden. Sie weisen Achsstummel 15 auf, mit denen sie in Bohrungen gelagert sind, die in Seitenwangen 16 des Schafts vorgesehen sind.

Die Greifräder 14 haben einen etwa dreimal so großen Durchmesser wie das Ritzel 13. Das bedeutet, daß einer Fingerbewegung um eine bestimmte Strecke eine Stößelbewegung 6 um ein Drittel dieser Strecke entspricht. Diese Untersetzung führt zu einer feinfühligen Betätigung des Kolbens in der Spritzenpatrone. Die in Fig.3 und 4 gezeigte Spritzenpatrone 24 unterscheidet sich von der in Fig.1 gezeigten dadurch, daß sie mit einem verhältnismäßig langen, dünnen Ausbringröhrchen 25 versehen ist, das - wie in Fig.4 strichpunktiert gezeigt - leicht derart gebogen werden kann, daß es die gebogene Form beibehält. Dies ermöglicht es, den Schaft 1 des Applikationsgeräts im Gegensatz zu der Ausführung gemäß Fig.1 ungekrümmt auszuführen, wodurch die Reibung zwischen Stößel und Schaft weiter herabgesetzt wird. Der Außendurchmesser des Ausbringröhrchens liegt beispielsweise im Bereich von 1 bis 2 mm bei Verwendung eines plastisch verformbaren Kunststoffs wie Polyamid.

Die Kupplungseinrichtung zur Verbindung von Applikationsgerät und Patronenkapsel 24 besteht auf Seiten des Schafts aus einem Schlitz 26, dessen Weite etwa dem Durchmesser der Kapselpatrone 24 entspricht, und einem Hinterschnitt 27, dessen Gestalt einem Kragen 28 am hinteren Ende der Patronenkapsel 24 gleicht. Von der Seite her kann die Patrone 24 in den Schlitz 26, 27 eingeschoben werden, wobei die Maße zweckmäßigerweise so gewählt sind, daß die Spritzenpatrone durch Reibkraft in Ihrer vorgesehenen Stellung vorläufig fixiert ist. Sobald der Stößel 6 in die Patrone eingetreten ist, wie es in Fig. 4 gestrichelt dargestellt ist, ist die Patrone in der Kupplungsstellung gesichert. Erst nach dem Zurückziehen des Stößels kann die Kupplung wieder gelöst werden.

## Patentansprüche

1. Applikationsgerät für Dentalmasse mit einem in Bleistifthaltung greifbaren Schaft (1), dessen vorderes Ende mit einer die Dentalmasse und einen Kolben enthaltenden Spritze (4, 24) verbunden oder verbindbar ist und der einen Stößel (6) zum Vortreiben des Kolbens enthält, der mit einer Betätigungseinrichtung in demjenigen Bereich des Schafts (1) verbunden ist, in welchem sich bei Bleistifthaltung eine Fingerspitze befindet, dadurch gekennzeichnet, daß die Betätigungseinrichtung ein Paar von am Schaft (1) gelagerten Greifrädern (14) umfaßt, die mit der Fingerspitze drehbar sind und beiderseits eines Ritzels (13) geringeren Durchmessers angeordnet sind, das in eine am Stößel vorgesehene Zahnstange (12) eingreift.

2. Applikationsgerät nach Ansprüche 1, dadurch gekennzeichnet, daß der Stößel (6) geradlinig gestreckt ist und daß die fluchtend mit dem Stößel angeordnete Spritze (24) in einem dünnen, bleibend biegbaren Ausbringröhrchen (25) endet.

## Claims

1. An applicator for a dental composition, having a shank (1) which can held in a pencil grip, the front end of which is connected or can be connected to a syringe (4,24) containing the dental composition and a piston and which contains a plunger (6) for advancing the piston, which is connected with an actuating means in that region of the shank (1) in which a finger tip is situated when it is held in a pencil grip, characterised in that the actuating means comprises a pair of grip wheels (14) which are mounted on the shank (10), which can be rotated by the finger tip and which are arranged on either side of a pinion (13) of smaller diameter, which engages in a rack (12) provided on the plunger.

2. An applicator according to Claim 1, characterised in that the plunger (6) is extended in a straight line and in that the syringe (24), arranged in alignment with the plunger, ends in a thin, permanently flexible applicator tube (25).

## Revendications

1. ― Appareil d'application d'une masse dentaire comportant un manche (1) pouvant être tenu comme un crayon, dont l'extrémité avant est ou peut être reliée à une seringue (4, 24) contenant la masse et un piston et qui comporte un poussoir (6) pour actionner le piston, qui est relié à un dispositif d'entraînement situé dans la zone du manche (1) dans laquelle se trouve l'extrémité d'un doigt lors de la tenue comme un crayon, caractérisé par le fait que le dispositif d'entraînement comprend une paire de molettes (14) montées sur le manche (1), qui peuvent être mises en rotation par l'extrémité du doigt et qui sont disposées de part et d'autre d'un pignon (13) de diamètre inférieur qui engrène avec une crémaillère prévue sur le poussoir.

2. Appareil d'application selon la revendication 1, caractérisé par le fait que le poussoir (6) s'étend de façon rectiligne et que la seringue (24), disposée en alignement avec le poussoir, se termine par un petit tube distributeur (25) mince et pouvant subir une pliure permanente.
